# EUROPÄISCHE PATENTANMELDUNG

(11) **EP 4 108 604 A1**
(43) Veröffentlichungstag der Anmeldung: **28.12.2022**
(21) Anmeldenummer: 21181502.2
(22) Anmeldetag: 24.06.2021
(51) Int. Cl.: B65G 43/08, B07C 5/04, B64F 1/36

(54) **BELADEN VON TRANSPORTBEHÄLTERN EINER FÖRDERANLAGE, INSBE-SONDERE EINER FLUGHAFEN-GEPÄCKFÖRDERANLAGE, MIT STÜCKGÜ-TERN VARIABLER GRÖSSE**

(71) Anmelder: Siemens Aktiengesellschaft, 80333 München (DE)
(72) Erfinder: MUECK, Dr. Bengt, 90429 Nürnberg (DE); SCHWINGE, Christian Oliver, 90556 Cadolzburg (DE)
(74) Vertreter: Siemens Patent Attorneys

(57) **Zusammenfassung**

Zur Kapazitätserhöhung einer Transportbehälter-Förderanlage (2) werden Sortierprozesse und Dimensionen der an einer Beladestation (4) ankommenden Stückgüter (14) ermittelt. Wenn zwei oder mehr Stückgüter (14) mit übereinstimmenden Sortierprozessen und passenden Dimensionen gefunden werden, werden diese Stückgüter gemeinsam auf einen Transportbehälter (6) geladen und gemäß dem übereinstimmenden Sortierprozess behandelt und am Sortierziel entladen. Andernfalls erfolgt ein individuelles Beladen der Stückgüter (14) auf jeweils eigene Transportbehälter (6).

## Beschreibung

Die vorliegende Erfindung betrifft das technische Gebiet der Fördersysteme für Stückgüter in Transportbehältern, speziell Flughafen-Gepäckfördersysteme.

In vielen Flughafen-Gepäckförderanlagen werden Gepäckstücke in (Transport-)Behältern (Trays) befördert. Die Gepäckstücke werden zu einer Beladestation transportiert und dort jeweils in einen Behälter geladen, der in der Anlage transportiert, sortiert, gelagert und ähnlichen Prozeduren unterzogen wird, bis der Behälter auf eine von Informationen bezüglich des Gepäckstückes bestimmten Entladestelle, typischerweise ein einem Flug zugeordnetes Band (=Sortierziel), entladen wird. Da jedes Gepäckstück einen individuellen Sortierprozess und ein individuelles Sortierziel hat, wird jeweils nur ein Gepäckstück auf einen Behälter geladen. Der Durchsatz einer Gepäckförderanlage korrespondiert direkt mit dem Durchsatz der Behälter. Die benötigte Kapazität muss daher in einem für den jeweiligen Anwendungsfall hinreichend dimensionierten Behältersystem bereitgestellt werden.

Basierend auf Planungsdaten werden Gepäckförderanlagen und Behältergrößen dimensioniert. Wird mehr als die Leistung einer Einheit (z.B. Transport, Sortierung, Lagerung) benötigt, werden entsprechend mehrere parallele Prozesseinheiten geplant. Daneben werden von den Kunden redundante Linien gefordert und geplant. Erhöht sich die Anzahl der Prozesseinheiten müssen auch weitere Verbindungen zwischen diesen geschaffen werden mit entsprechendem Aufwand.

Da nachträgliche Kapazitätserhöhungen aufgrund des begrenzten zur Verfügung stehenden Platzes einer bereits bestehenden Gepäckförderanlage schwierig sind, geschieht die Dimensionierung während der Planungsphase. Wächst ein Flughafen und die Anlage muss erweitert werden, sind aufgrund des erhöhten Platzbedarfs der Anlage oftmals umfangreiche Umbauten und Erweiterungen erforderlich. Dieselbe Problematik stellt sich auch bei AGV Systemen und sonstigen Fördersystemen, die Stückgüter in Behältern transportieren.

Der vorliegenden Erfindung liegt daher die Aufgabe zugrunde, eine Lösung bereitzustellen, mit welcher die Kapazität bestehender und zukünftiger Transportbehälter-Förderanlagen ohne zusätzlichen Raumbedarf erhöht werden kann.

Diese Aufgabe wird durch die in den unabhängigen Ansprüchen beschriebenen Lösungen gelöst.

Die erfindungsgemäße Lösung zeichnet sich aus durch ein Verfahren zum Beladen von Transportbehältern einer Förderanlage, insbesondere einer Flughafen-Gepäckförderanlage, mit Stückgütern variabler Größe an einer Beladestation, wobei jedes Stückgut einen eigenen Sortierprozess aufweist und die Innenmaße der Transportbehälter bekannt sind, mit den Verfahrensschritten: Ermitteln des Sortierprozesses und der Dimension eines ersten Stückguts. Ermitteln des Sortierprozesses und der Dimension eines weiteren Stückguts. Vergleichen der ermittelten Sortierprozesse und/oder Dimensionen. Wenn die ermittelten Sortierprozesse von mindestens zwei, insbesondere nachfolgend an derselben Beladestation ankommenden, Stückgütern übereinstimmen und die ermittelten Dimensionen dieser Stückgüter dergestalt sind, dass sie von einem Transportbehälter gemeinsam aufnehmbar sind, Beladen eines Transportbehälters mit diesen zwei Stückgütern und Transportieren dieses Transportbehälters gemäß dem übereinstimmenden, gemeinsamen Sortierprozess, andernfalls Durchführung der vorherigen Verfahrensschritte für noch ein weiteres Stückgut. Wenn keine zwei gemeinsam von einem Transportbehälter aufnehmbaren Stückgüter mit übereinstimmenden Sortierprozessen gefunden werden, individuelles Beladen jeweils eigener Transportbehälter mit diesen Stückgütern. Transport der beladenen Transportbehälter zu ihren durch die Sortierprozesse der Stückgüter bestimmten Sortierzielen. Entladen eines Stückguts bzw. mehrerer Stückgüter von dem Transportbehälter. Ohne weitere Vorschriften wird jeweils das jeweils zuletzt erfasste Stückgut (bzw. die zuletzt erfassten Stückgüter) für den Vergleich zurückbehalten.

So können sich die folgenden Vorteile zusätzlich ergeben:
i) Die erfindungsgemäße Lösung eignet sich besonders gut für einen Retrofit bestehender Förderanlagen, da die zur Implementierung notwendigen Komponenten schon vorhanden oder leicht nachrüstbar sind und - je nach Implementierung - kein oder nur sehr wenig zusätzlicher Platz benötigt wird.
ii) Durch die erfindungsgemäße Lösung kann die Anzahl benötigter Transportbehälter reduziert werden.
iii) Die erfindungsgemäße Lösung erlaubt die Verwendung größerer Transportbehälter um größere Stückgüter aufnehmen zu können, wobei die mit größeren Transportbehältern verbundene Kapazitätseinbuße kompensiert wird.

Wenn das erfindungsgemäße Verfahren für mehr als unmittelbar hintereinander nachfolgende Stückgüter durchgeführt wird, umfasst die Förderanlage im Bereich der Beladestation einen Speicherbereich als Zwischenspeicher um die Stückgüter, deren Sortierprozess und Dimension bereits erfasst sind, die aber noch nicht auf einen Transportbehälter geladen worden sind, für eine gemeinsame Beladung mit mindestens einem weiteren Stückgut zurückzuhalten. Es ist selbstverständlich auch möglich, einen Transportbehälter mit einem kleineren Stückgut zu beladen und diesen beladenen Transportbehälter in einem Speicherbereich für eine potentielle weitere Beladung zurückzuhalten.

Wenn beim Vergleichen sich zwei Stückgüter aufgrund ihrer Dimensionen oder ermittelten Sortierprozesse nicht für einen gemeinsamen Transportbehälter eignen, kann der Vergleich abgebrochen werden und das Verfahren für ein weiteres Stückgut fortgesetzt werden. Ob zunächst der Vergleich der Dimensionen oder Sortierprozesse erfolgt, ist hierbei irrelevant.

Vorzugsweise wird das erfindungsgemäße Verfahren automatisiert durchgeführt. Das erfindungsgemäße Verfahrens kann auch für übereinstimmende Teil-Sortierprozesse durchgeführt werden, erfordert dann jedoch noch zusätzliche Entladefunktionalitäten. Das Entladen erfolgt an dem durch den Sortierprozess bestimmten Sortierziel oder vorher an geeigneter Stelle, falls ein vorheriger Zugriff auf ein Stückgut erforderlich ist. Es ist vorgesehen, alle Stückgüter, mit denen der Transportbehälter beladen ist, an dem Sortierziel zu entladen. Wenn ein Transportbehälter mit nur einem Stückgut beladen ist, wird nur dieses eine Stückgut entladen. Wenn ein Transportbehälter mit zwei oder mehr Stückgütern beladen ist, werden alle diese zwei oder mehr Stückgüter an dem Sortierziel entladen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Bevorzugt kann vor und/oder während des Beladens der Transportbehälter Ausrichten der Stückgüter um ihre jeweiligen horizontalen und/oder vertikalen Achsen erfolgen, so dass die Transportbehälter hinsichtlich ihrer Raumausnutzung optimiert beladen werden. Hierzu kann die Förderanlage bevorzugt umfassen eine von der Beladestation umfasste Ausrichtungseinheit zum Ausrichten der Stückgüter um ihre jeweiligen horizontalen und/oder vertikalen Achsen vor und/oder während des Beladens der Transportbehälter, so dass die Transportbehälter hinsichtlich ihrer Raumausnutzung optimiert beladen werden. Das Optimieren der Ausrichtung der Stückgüter passiert vor oder in Zusammenhang mit der Beladung. Ohne Ausrichtung kann ein Stückgut evtl. so positioniert sein, dass eine Beladung gar nicht möglich ist, da das Stückgut in der vorliegenden Ausrichtung gar nicht auf den Transportbehälter passt.

In einer bevorzugten Ausführungsform ist auch vorgesehen ein Ermitteln und Vergleichen des Gewichts der Stückgüter mit ermitteltem Sortierprozess und Dimension und Beladen eines Transportbehälters mit mehr als einem Stückgut nur wenn die das gemeinsame Gewicht dieser Stückgüter ein vorbestimmtes Gewicht nicht überschreitet. Hierzu kann ein von der Förderanlage umfasste Erfassungseinheit ausgestaltet sein zum Ermitteln des Gewichts eines Stückguts und das Hintergrundsystem kann ausgestaltet sein zum Vergleichen der ermittelten Gewichte der Stückgüter mit ermitteltem Sortierprozess und Dimension und nur dann das Beladen eines Transportbehälters mit mehr als einem Stückgut zu veranlassen, wenn das gemeinsame Gewicht dieser Stückgüter ein vorbestimmtes Gewicht nicht überschreitet. Das Gewicht kann ermittelt werden durch Wiegen an der Erfassungseinheit selber oder anhand des bei Einbringen in die Förderanlage ermittelten und abgespeicherten Gewichts.

Das Bestimmen der Dimensionen der Stückgüter kann geschehen mit optischen Verfahren, insbesondere Kameras, Laser oder Lichtschranke.

Bevorzugt kann das Vergleichen der Stückgüter untereinander durchgeführt werden, so dass das Stückgut für die Durchführung des erfindungsgemäßen Verfahrens ab Verfahrensschritt c) einbezogen wird, nur für eine vorab festgelegte Anzahl von nacheinander und/oder innerhalb einer bestimmten Zeitspanne an der oder den Beladestationen ankommender Stückgüter. Falls bis dahin kein weiteres, für eine gemeinsame Beladung passendes Stückgut gefunden wird, werden die Stückgüter einzelnen auf einen Transportbehälter gemäß Verfahrensschritt e) geladen. So muss kein aufwendiges Management betrieben und es muss kein oder nur sehr wenig zusätzlicher Warteplatz geschaffen werden für die bereits erfassten, aber noch nicht verglichenen und auf einen Transportbehälter beladenen Stückgüter.

Gemäß einer Ausführungsform können kleinere Stückgüter deren ermittelte Dimension vorab festgelegte Masse unterschreiten zwischengelagert und für den Vergleich mit einbezogen werden. Ein Zwischenlagern dieser kleineren Stückgüter erfolgt solange bis der Transport zu dem Sortierziel bzw. die Durchführung des Sortierprozesses (z.B. zeitlich) dringlich wird /und/oder für eine vorab festgelegte Anzahl nacheinander und/oder innerhalb einer bestimmten Zeitspanne an der oder den Beladestationen (4) ankommender Stückgüter (14) und/oder solange genügend Zwischenspeicherplatz vorhanden ist. Nach dem Zwischenspeichern erfolgt ein Zuführen dieser zwischengelagerten Stückgüter für den Verfahrensschritt des gemeinsamen Beladens hin zur Beladestation. Hierzu kann die Förderanlage im Beladebereich der Beladestation ein Zwischenlager zum Zwischenlagern von kleineren Stückgütern umfassen deren ermittelte Dimension vorab festgelegte Masse unterschreitet vor dem Beladen der Transportbehälter.

Bevorzugt kann das Entladen des einen Stückguts bzw. der mindestens zwei oder mehr Stückgüter von seinem bzw. dem gemeinsamen Transportbehälter durchgeführt werden an dem vorgesehenen Sortierziel des Stückguts bzw. der Stückgüter oder an anderer Position aufgrund eines erforderlichen Zugriffs auf das Stückgut.

Gemäß einer Ausführungsform kann eine Durchführung des Verfahrens erfolgen für an zwei oder mehr Beladestationen ankommende Stückgüter. Es kann erfolgen ein sequentielles Beladen, d.h. ein Transport des mit bereits einem Stückguts beladenen Transportbehälters von der einen zur nächsten Beladestation oder aber ein Transport des Stückguts von der einen zur weiteren Beladestation, wo beide Stückgüter auf einen gemeinsamen Transportbehälter geladen werden.

Bevorzugt kann zudem erfolgen Ermitteln des Sortierprozesses und der Dimension von mindestens noch einem weiteren Stückguts. Die ermittelten Sortierprozesse und/oder Dimensionen aller erfassten Stückgüter können verglichen werden. Wenn die ermittelten Sortierprozesse von drei oder noch mehr Stückgütern übereinstimmen und die ermittelten Dimensionen dieser drei Stückgüter dergestalt sind, dass diese drei oder noch mehr Stückgüter gemeinsam von einem Transportbehälter aufnehmbar sind, kann das Beladen eines gemeinsamen Transportbehälters mit diesen Stückgütern und das Transportieren dieses gemeinsamen Transportbehälters gemäß dem übereinstimmenden Sortierprozess erfolgen. Andernfalls kann die weitere Durchführung der erfindungsgemäßen Verfahrensschritte erfolgen.

Die erfindungsgemäße Vorrichtung betrifft eine Förderanlage, insbesondere eine Flughafen-Gepäckförderanlage, für Stückgütern variabler Größe in Transportbehältern gemäß ihren Sortierprozessen umfassend Mittel zur Durchführung des erfindungsgemäßen Verfahrens.

Hierzu kann die Förderanlage umfassen: Transportbehälter mit bekannten Innenmaßen; eine Erfassungseinheit zum Erfassen von Sortierprozess und Dimension von einem Stückgut; ein Hintergrundsystem zum automatisierten Vergleichen der ermittelten Sortierprozesse von mindestens zwei, insbesondere nachfolgend an derselben Beladestation ankommenden, Stückgütern und zum Überprüfen ob die ermittelten Dimensionen dieser Stückgüter dergestalt sind, dass sie von einem Transportbehälter gemeinsam aufnehmbar sind; eine Beladestation zum automatisierten Beladen von einem der Transportbehälter mit einem und mindestens zwei Stückgütern und eine Entladefunktionalität zum Entladen der Stückgüter von den Transportbehältern. Die Förderanlage umfasst Förderstrecken zum Transport der Transport der Transportbehälter zu ihren Sortierzielen oder weist, z.B. nicht-flurgebundenen Förderanlagen, wählbare Förderwege auf.

Die Beladestation kann bevorzugt ausgestaltet sein zum Beladen von zwei oder mehr Stückgütern auf einen Transportbehälter.

Weitere vorteilhafte Ausführungsformen der Erfindung sind in den abhängigen Ansprüchen angegeben.

Unter einem Sortierprozess soll verstanden werden der gesamte vorgesehene Prozess des Stückguts in der Förderanlage. Dieser wird bei Fluggepäck bestimmt sowohl durch den Flug (der das Sortierziel bestimmt), als auch durch den Zeitpunkt des Einbringens in die Gepäckförderanlage: z.B. erfolgt bei Vorabend-Check-in eine Zwischenlagerung in einem Frühgepäckspeicher, während bei zeitnahem Einbringen in die Gepäckförderanlage ein direkter Transport hin zum Sortierziel erfolgt.

Ausführungsformen der Erfindung werden nachfolgend anhand der Figuren beispielsweise näher erläutert. Dabei zeigen:
- Figur 1: eine erfindungsgemäße Förderanlage;
- Figuren 2 bis 5: Förderanlagen mit unterschiedlichen Zwischenspeicher-Ausführungen.

Das nachstehend detailliert beschriebene Ausführungsbeispiel bezieht sich auf eine Flughafen-Gepäckförderanlage 2. Die Erfindung ist jedoch nicht auf Gepäckförderanlagen 2 beschränkt, sondern für jede Art von Fördersystemen 2 anwendbar, die Stückgüter 14 in Transportbehältern 6 transportiert, beispielsweise AGV-Fördersysteme. Ziel ist das Finden von zwei oder mehr Stückgütern 14 mit gemeinsamen Sortierprozess, die klein genug dimensioniert sind, um in einen Transportbehälter 6 zu passen, und das gemeinsame Transportieren dieser zwei oder mehr Stückgüter 14 in einem gemeinsamen Transportbehälter 6.

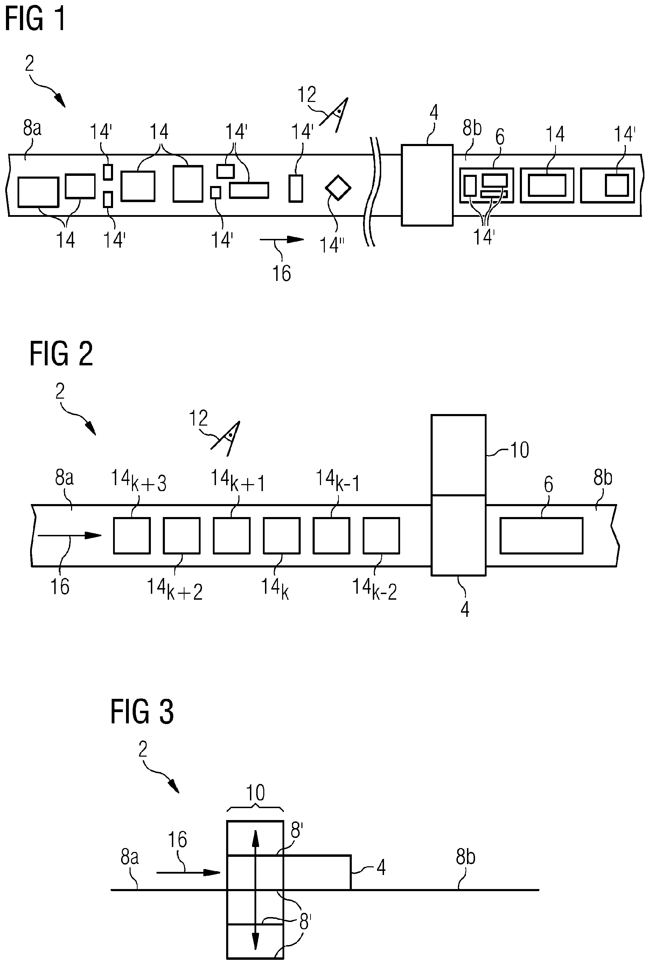

Figur 1 zeigt einen Ausschnitt einer Gepäckförderanlage 2. Auf einer Förderstrecke 8a werden Gepäckstücke 14, 14' hin zu einer Beladestation 4 transportiert und von einer Erfassungseinheit 12, umfassend z.B. eine Kamera, Lichtgitter- und/oder -schranken, werden die Dimensionen der Gepäckstücke 14, 14' sowie deren Sortierprozess, welcher durch Auslesen des Gepäckanhängers oder eines anderen Informationsträgers mit bekannten Verfahren, allenfalls unter Verwendung allfälliger zusätzlicher BSM-Datenbanken ermittelbar ist, detektiert bzw. ermittelt.

Gepäckstücke 14, 14' haben unterschiedliche Dimensionen. Ein normaler Transportbehälter 6 ist hinreichend dimensioniert, mehrere Gepäckstücke 14', die die Dimensionen nicht voll ausschöpfen und den gleichen Prozess (Sortierziel, z.B. den gleichen Flug samt gleicher Gepäckkategorie) haben, aufzunehmen und zu transportieren. Kleinere Gepäckstücke 14', in dem Sinne dass sie gemeinsam auf einen Transportbehälter 6 passen, werden bei übereinstimmendem Sortierprozess gemeinsam auf einen Transportbehälter 6 geladen. Das Beladen eines Transportbehälters 6 geschieht an einer Beladestation 4. Solche Beladestationen 4 sind auf vielfältige Art und Weise und ohne erfinderisches Zutun für den Fachmann realisierbar, daher wird auf eine genauere Beschreibung verzichtet.

Zunächst werden die Dimensionen der an der Verladestation auf einer Förderstrecke 8a, typischerweise ein Gurtfördersystem, ankommenden Gepäckstücke 14, 14' ermittelt. Die Sortierinformationen der Gepäckstücke 14, 14' werden ermittelt um die (Sortier-)Prozessschritte auf der Gepäckförderanlage 2 (Frühgepäckspeicher, direkt Transport zum Sortierziel, ...) zu bestimmen. Es werden Gepäckstücke 14' gesucht, die sich einen Transportbehälter 6 teilen können und in einen Transportbehälter 6 geladen. Hierzu müssen sowohl die Sortierprozesse übereinstimmen als auch müssen die Dimensionen der Gepäckstücke 14' klein genug sein, dass diese Gepäckstücke 14' gemeinsam von einem Transportbehälter 6 aufnehmbar sind. Für das das Verfahren ist es daher unerheblich, ob zunächst die erfassten Sortierprozesse zweier Gepäckstücke 14 oder die erfassten Dimensionen verglichen werden - wenn ein Vergleich keine gemeinsame Beladung auf einen Transportbehälter 6 zulässt, kann der Vergleich abgebrochen werden.

Optional werden die Gepäckstücke 14" vor oder während der Beladung noch ausgerichtet (Drehen um horizontale und/oder vertikale Achsen), um eine optimale Raumausnutzung des Transportbehälters 6 zu erzielen, so dass evtl. sogar mehr als zwei Gepäckstücke 14' von einem Transportbehälter 6 aufnehmbar sind. Die Anpassung der Ausrichtung der Gepäckstücke 14 erhöht die Wahrscheinlichkeit, dass eine gemeinsame Beladung mit einem weiteren Gepäckstück 14 erfolgt. Gepäckstücke, die in Längsrichtung an der Beladestation 4 ankommen, können in einer bestimmten Ausrichtung, typischerweise quer gedreht, mit einer höheren Wahrscheinlichkeit in einen Transportbehälter 6 passend geladen werden. Neben der Drehung in vertikaler Richtung sind auch Drehungen um alle anderen Achsen ausführbar.

Typische Beladestationen 4 beladen die Transportbehälter 6 von oben, wobei auch eine seitliche Beladung denkbar ist. Eine Entladung wird auch von unten oder aber normal von oben oder seitlich durchgeführt.

Gemäß einer Ausführungsform werden zwei für einen Transportbehälter 6 gepaarte Gepäckstücke 14 sequentiell von einer Gurtförderer 8 auf den gemeinsamen Transportbehälter 6 geladen. Der Transportbehälter 6 bewegt sich synchron zur Abgabe des Gurtförderers 8. Die Gepäckstücke 14' werden durch eine geeignete Synchronisation in verschiedene Bereiche des Transportbehälters 6 geladen. Durch die synchronisierte Beladung gibt es keinen Zeitverlust - das Beladen mit zwei Gepäckstücken 14' dauert so gleich lange wie das Beladen mit einem SG.

Der beladene, gemeinsame Transportbehälter 6 wird mit den Gepäckstücken 14' gemäß dem vorgesehenen Sortierprozess behandelt und hin zum Sortierziel befördert, wo die Transportbehälter 6 entladen werden. Ein gemeinsamer Transportbehälter 6 wird in der gleichen Art durch die Förderanlage 2 befördert, gelagert und gespeichert wie ein mit nur einem Gepäckstück 4 beladener Transportbehälter 6 und an dem durch den Sortierprozess bestimmten Sortierziel entladen. An dem durch die Stückgut-Beladung bestimmten Sortierziel werden alle Stückgüter 14, 14' (ein Stückgut 14 bei individueller Beladung, zwei oder noch mehr Stückgüter 14' bei gemeinsamer Beladung) dieses Transportbehälters 6 entladen. In einzelnen Fällen müssen Gepäckstücke 14' schon vorher getrennt werden, beispielsweise weil ein Passagier Zugriff auf Medikamente in seinem Koffer 4 braucht. Hierfür wird an geeigneter Stelle entlang der Förderanlage 2 der gemeinsame Transportbehälter 6 teilweise oder vollständig entladen. Die Gepäckstücke 14' auf die kein Zugriff erforderlich ist, werden selbstverständlich wieder dem Sortierprozess zugeführt. Das Entladen von (individuellen und gemeinsamen) Transportbehältern 6 geschieht entsprechend bekannten Enlademethoden des Stands der Technik.

Gemäß einer Ausführungsform werden die Dimensionen und auch die Ausrichtung der Gepäckstücke 14 mit optischen Verfahren bestimmt. Dies können einfache Lichtschranken oder Lichtgitter sein, aber auch Kameras können als Erfassungseinheit 12 agieren.

Um gemäß einer Ausführungsform eine Überladung der Transportbehälter 6 zu verhindern, wird das Gewicht der Gepäckstücke 14' mit einer Waage bestimmt oder unter Zuhilfenahme der Daten des zuvor ausgelesenen Gepäckanhängers ermittelt. Sind die Kapazitäten des Behältersystems nicht durch das kombinierte Gepäckgewicht beschränkt, kann auf einen Gewichtsvergleich verzichtet werden.

Im einfachsten Fall wird ein Gepäckstück 14ₖ nur mit dem auf der Förderstrecke 8a unmittelbar vor 14ₖ₋₁ oder hinter ihm 14ₖ₊₁ transportierten Stückgut verglichen (Figur 2). Das Gepäckstück 14ₖ muss hierfür einfach eine kurze Zeit warten. Wenn das nachfolgende Gepäckstück 14ₖ₊₁ (oder das Gepäckstück 14ₖ selber aufgrund seiner Größe) keinen gemeinsamen Transportbehälter 6 erlaubt, wird das Gepäckstück 14ₖ₊₁ traditionell einzeln auf einen eigenen Transportbehälter 6 geladen und gemäß dem Sortierprozess behandelt. Passen die Gepäckstücke 14ₖ, 14ₖ₊₁ physisch zusammen auf einen Transportbehälter 6 und haben denselben Sortierprozess, werden diese Gepäckstücke 14ₖ, 14ₖ₊₁ gemeinsam an der Beladestation 4 automatisiert auf den Transportbehälter 6 geladen.

Bevorzugt kann das Verfahren gemäß einer Ausführungsform für mehr als die unmittelbar hinter- und/oder nebeneinander (einige Gepäckstücke 14' in Figur 1) fahrenden Gepäckstücke 14ₖ₋₁, 14ₖ₋₂, 14ₖ, 14_{k+1'} 14ₖ₊₂ angewendet werden. Hierzu werden diese erfassten Stückgüter 14 in einem Zwischenspeicher 10 als kurzfristigem Lager gesammelt. Für jedes weitere Stückgut 14 werden Sortierprozess und Dimension erfasst und mit den im Zwischenspeicher 10 gelagerten Stückgütern 14 verglichen.

Auch werden gemäß einer weiteren Ausführungsform an unterschiedlichen Beladestationen 4 ankommende Stückgüter 14 miteinander verglichen. Beide Ausführungsformen steigern die Chancen, dass sich mehrere Gepäckstücke 14' einen Transportbehälter 6 teilen können. Für das Beladen muss dann entweder eines der Gepäckstücke 14' hin zu der anderen Beladestation 4 werden, wo dann das weitere Gepäckstücke 14' wartet und dann wird ein Transportbehälter 6 an dieser Beladestation mit beiden Gepäckstücken 14' beladen. Oder ein Transportbehälter 6 wird an der einen Beladestation 4 mit einem Stückgut 14' beladenen und dann wird dieser Transportbehälter 6 zur weiteren Beladestation 4 transportiert und dann dort mit dem zweiten Gepäckstück 14' beladen.

In beiden Ausführungsformen werden die zwischengespeicherten Gepäckstücke 14' nur für eine gewisse Zeit und/oder für eine vorbestimmte Anzahl an hintereinander ankommenden Gepäckstücken 14 in dem Zwischenspeicher 10 gelagert, bevor ein einzelnes Beladen auf einen Transportbehälter erfolgt. Selbstverständlich muss ein Gepäckstück 14 unmittelbar aus dem Zwischenspeicher 10 entfernt werden und dem vorgesehenen Sortierprozess zugeführt werden, sobald dieser Sortierprozess zeitlich dringlich wird. Solange sich die Gepäckstücke 14 in dem Zwischenspeicher 10 befinden, werden sie für den Vergleich herangezogen um passende Stückgüter 14' für eine Beladung der Transportbehälter 6 mit mehr als einem Stückgut 14' zu finden.

Um die Kapazität der Zwischenspeicher 10 nicht über Gebühr zu beanspruchen, erfolgt gemäß einer Ausführungsform nur dann ein Zwischenspeichern, wenn die Dimensionen des erfassten Stückguts 14' ein vorbestimmtes Maß unterschreitet und somit mit hoher Wahrscheinlichkeit ein für ein gemeinsames Beladen passendes weiteres Stückgut 14' mit passender Dimension und übereinstimmenden Sortierprozess zu finden ist.

Die Figuren 3, 4 und 5 zeigen beispielhaft, aber nicht abschließend, mögliche Ausführungsformen eines Zwischenspeichers 10. Figur 3 zeigt in seitlicher Ansicht einen aufzugähnlichen Zwischenspeicher 10, wobei die "Kabinen" Böden mit Transportbändern 8' aufweisen. Wenn ein Gepäckstück 14 nicht zwischengespeichert werden soll, wird einfach mit dem Transportband 8' durch die Kabine hindurchgefördert. Wenn zwischengespeichert werden soll, wird das Gepäckstück 14 einfach nach oben oder unten gefahren und eine freie Aufzugkabine auf Höhe der übrigen Förderstrecke positioniert.

Auch möglich ist es, Stückgüter 14' in einem Transportbehälter 6 zwischenzuspeichern und die mit einem Stückgut 14' beladenen Transportbehälter 6 dann in einem Zwischenspeicher 10 zwischenzuspeichern. Wenn ein weiteres Stückgut 14' mit übereinstimmenden Sortierprozess und passenden Massen gefunden wird, wird dieses dann in den bereits beladenen Transportbehälter 6 zu dem ersten Gepäckstück 14' geladen.

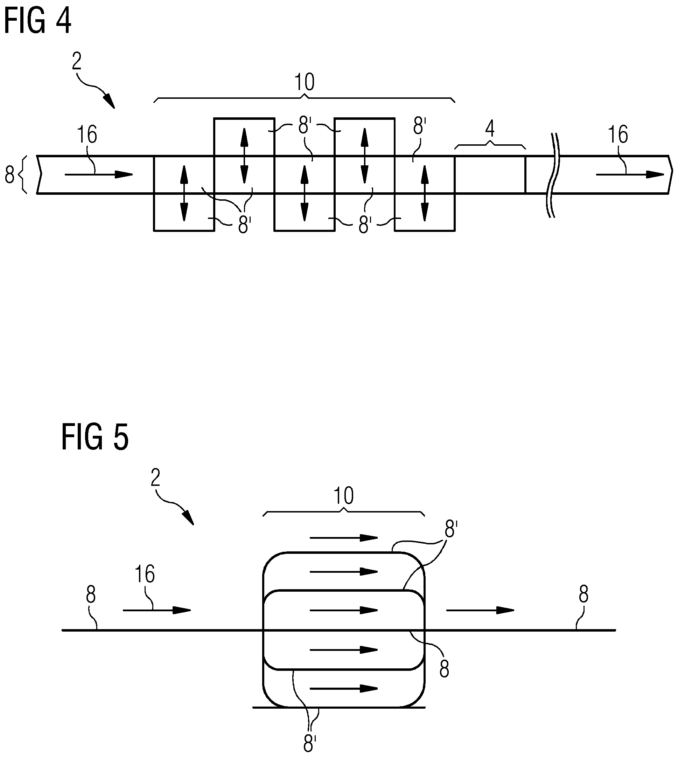

Figur 4 zeigt eine Ausführungsform bei der eine Förderstrecke 8 mit Metering als Zwischenspeicher herangezogen wird. Und Figur 5 zeigt eine sich in kleine Teilstrecken 8' verzweigende Förderstrecke 8, wobei die Teilstrecken 8' als Zwischenspeicher 10 dienen können. EP2041005 offenbart einen revolverartig ausgestalteten Zwischenspeicher 10, der sich ebenfalls sehr gut für das erfindungsgemäße Verfahren eignet.

Die Eingriffe zum Beladen von Transportbehältern 6 mit mehr als einem Gepäckstück 14' beschränken sich fast nur lokal auf die Bereiche der Beladestation 4 und angrenzende Bereiche. Die Kapazitätserhöhung schlägt sich aber auf der ganzen Förderanlage 2 flussabwärts nieder. Auch wenn nur ein kleiner Teil der Transportbehälter 6 mit mehreren Gepäckstücken 14' beladen werden kann, erhöht sich die Kapazität der gesamten Förderanlage 2 entsprechend. Können 20% der zu transportierenden Gepäckstücke 14 jeweils zu zweit in einen Transportbehälter 6 geladen werden, werden nur 90% der Transportbehälter 6 benötigt und es werden nur 90% des (Früh-)Gepäckspeichers benötigt. Durch eine rein lokal beschränkte Veränderung an den Beladestationen wird eine systemweite Kapazitätserhöhung der Transportbehälter-Förderanlage erreicht.

### Bezugszeichenliste

- 2: Förderanlage
- 4: Beladestation
- 6: Transportbehälter
- 8: Förderstrecke
- 10: Zwischenspeicher
- 12: Erfassungseinheit
- 14: Stückgut
- 16: Transportrichtung

## Patentansprüche

1. Verfahren zum Beladen von Transportbehältern (6) einer Förderanlage (2), insbesondere einer Flughafen-Gepäckförderanlage (2), mit Stückgütern (14, 14') variabler Größe an einer Beladestation (4), wobei jedes Stückgut (14) einen eigenen Sortierprozess aufweist und die Innenmaße der Transportbehälter (6) bekannt sind, **gekennzeichnet durch** die Verfahrensschritte:
a) Ermitteln des Sortierprozesses und der Dimension eines ersten Stückguts (14);
b) Ermitteln des Sortierprozesses und der Dimension eines weiteren Stückguts (14);
c) Vergleichen der ermittelten Sortierprozesse und/oder Dimensionen;
d) wenn die ermittelten Sortierprozesse von mindestens zwei, insbesondere nachfolgend an derselben Beladestation (4) ankommenden, Stückgütern (14') übereinstimmen und die ermittelten Dimensionen dieser Stückgüter (14') dergestalt sind, dass sie von einem Transportbehälter (6) gemeinsam aufnehmbar sind, Beladen eines Transportbehälters (6) mit diesen zwei Stückgütern (14') und Transportieren dieses Transportbehälters (6) gemäß dem übereinstimmenden Sortierprozess, andernfalls Durchführung der Verfahrensschritte b), c) und d) für noch ein weiteres Stückgut (14);
e) wenn keine zwei gemeinsam von einem Transportbehälter (6) aufnehmbaren Stückgüter (14) mit übereinstimmenden Sortierprozessen gefunden werden, individuelles Beladen jeweils eigener Transportbehälter (6) mit diesen Stückgütern (14);
f) Transport der beladenen Transportbehälter (6) zu ihren durch die Sortierprozesse der Stückgüter (14) bestimmten Sortierzielen;
g) Entladen des einen Stückguts (14) bzw. der mindestens zwei Stückgüter (14') von dem Transportbehälter (6).

2. Verfahren nach Anspruch 1, zudem umfassend den Verfahrensschritt
vor und/oder während des Beladens der Transportbehälter (6) Ausrichten der Stückgüter (14) um ihre jeweiligen horizontalen und/oder vertikalen Achsen, so dass die Transportbehälter (6) hinsichtlich ihrer Raumausnutzung optimiert beladen werden.

3. Verfahren nach einem der Ansprüche 1 bis 2, **gekennzeichnet durch**
Ermitteln und Vergleichen des Gewichts der Stückgüter (14) mit ermitteltem Sortierprozess und Dimension und Beladen eines Transportbehälters (6) mit mehr als einem Stückgut (14) nur wenn die das gemeinsame Gewicht dieser Stückgüter (14) ein vorbestimmtes Gewicht nicht überschreitet.

4. Verfahren nach einem der Ansprüche 1 bis 3, **gekennzeichnet durch**
das Bestimmen der Dimensionen der Stückgüter (14) mit optischen Verfahren, insbesondere Kameras, Laser oder Lichtschranke.

5. Verfahren nach einem der Ansprüche 1 bis 4, **dadurch gekennzeichnet, dass**
das Vergleichen der Stückgüter (14) untereinander nur durchgeführt wird für eine vorab festgelegte Anzahl von nacheinander und/oder innerhalb einer bestimmten Zeitspanne an der oder den Beladestationen (4) ankommender Stückgüter (14).

6. Verfahren nach einem der Ansprüche 1 bis 5, **gekennzeichnet durch**
Zwischenlagern von kleineren Stückgütern (14) deren ermittelte Dimension vorab festgelegte Masse unterschreiten solange bis die Durchführung des Verfahrensschritts f) von Anspruch 1 dringlich wird /und/oder für eine vorab festgelegte Anzahl nacheinander und/oder innerhalb einer bestimmten Zeitspanne an der oder den Beladestationen (4) ankommender Stückgüter (14) und/oder solange genügend Zwischenspeicherplatz vorhanden ist und Einbeziehen dieser zwischengelagerten Stückgüter (14) für die Durchführung des Verfahrens nach Anspruch 1 ab Verfahrensschritt d).

7. Verfahren nach einem der Ansprüche 1 bis 6, **dadurch gekennzeichnet, dass**
das Entladen des Stückguts (14) bzw. der Stückgüter (14') gemäß Verfahrensschritt g) von Anspruch 1 durchgeführt wird an dem vorgesehenen Sortierziel des Stückguts (14) oder an anderer Position aufgrund eines erforderlichen Zugriffs auf das Stückgut (14).

8. Verfahren nach einem der Ansprüche 1 bis 7, **gekennzeichnet durch**
Durchführung des Verfahrens für an zwei oder mehr Beladestationen (4) ankommende Stückgüter (14).

9. Verfahren nach einem der Ansprüche 1 bis 8, zudem umfassend die Verfahrensschritte
- Ermitteln des Sortierprozesses und der Dimension von mindestens noch einem weiteren Stückguts (14);
- Vergleichen der ermittelten Sortierprozesse und/oder Dimensionen;
- wenn die ermittelten Sortierprozesse von drei oder noch mehr Stückgütern (14) übereinstimmen und die ermittelten Dimensionen dieser drei Stückgüter (14) dergestalt sind, dass diese drei oder noch mehr Stückgüter (14) gemeinsam von einem Transportbehälter (6) aufnehmbar sind, Beladen eines gemeinsamen Transportbehälters (6) mit diesen Stückgütern (14) (an der Beladestation (4)) und Transportieren dieses gemeinsamen Transportbehälters (6) gemäß dem übereinstimmenden Sortierprozess;
- andernfalls weitere Durchführung der in einem der Ansprüche 1 bis 8 beschriebenen Verfahrensschritte.

10. Förderanlage (2), insbesondere eine Flughafen-Gepäckförderanlage (2), für Stückgütern (14) variabler Größe in Transportbehältern (6) gemäß ihren Sortierprozessen umfassend Mittel zur Durchführung des Verfahrens nach einem der der Ansprüche 1 bis 9.

11. Förderanlage (2) nach Anspruch 10, umfassend
- Transportbehälter (6) mit bekannten Innenmaßen;
- eine Erfassungseinheit (12) zum Erfassen von Sortierprozess und Dimension von einem Stückgut (14);
- ein Hintergrundsystem zum automatisierten Vergleichen der ermittelten Sortierprozesse von mindestens zwei, insbesondere nachfolgend an derselben Beladestation (4) ankommenden, Stückgütern (14) und zum Überprüfen ob die ermittelten Dimensionen dieser Stückgüter (14) dergestalt sind, dass sie von einem Transportbehälter (6) gemeinsam aufnehmbar sind;
- eine Beladestation (4) zum automatisierten Beladen von einem der Transportbehälter (6) mit einem und mindestens zwei Stückgütern (14);
- eine Entladefunktionalität zum Entladen der Stückgüter (14) von den Transportbehältern (6).

12. Förderanlage (2) nach einem der Ansprüche 10 bis 11, zudem umfassend
eine von der Beladestation (4) umfasste Ausrichtungseinheit zum Ausrichten der Stückgüter (14) um ihre jeweiligen horizontalen und/oder vertikalen Achsen vor und/oder während des Beladens der Transportbehälter (6), so dass die Transportbehälter (6) hinsichtlich ihrer Raumausnutzung optimiert beladen werden.

13. Förderanlage (2) nach einem der Ansprüche 10 bis 12, **dadurch gekennzeichnet, dass**
die Erfassungseinheit (12) ausgestaltet ist zum Ermitteln des Gewichts eines Stückguts (14) und das Hintergrundsystem ausgestaltet ist zum Vergleichen der ermittelten Gewichte der Stückgüter (14) mit ermittelten Sortierprozessen und Dimension und nur dann das Beladen eines Transportbehälters (6) mit mehr als einem Stückgut (14) zu veranlassen, wenn das gemeinsame Gewicht dieser Stückgüter (14) ein vorbestimmtes Gewicht nicht überschreitet.

14. Förderanlage (2) nach einem der Ansprüche 10 bis 13, zudem umfassend
ein Zwischenlager zum Zwischenlagern von kleineren Stückgütern (14) deren ermittelte Dimension vorab festgelegte Masse unterschreitet vor dem Beladen der Transportbehälter (6).

15. Förderanlage (2) nach einem der Ansprüche 10 bis 14, **dadurch gekennzeichnet, dass**
die Beladestation (4) ausgestaltet ist zum Beladen von zwei oder mehr Stückgütern (14) auf einen Transportbehälter (6).
